# EUROPEAN PATENT SPECIFICATION

(11) **EP 0 721 889 B1**
(45) Date of publication and mention of the grant of the patent: **25.11.1998**
(21) Application number: 96200068.3
(22) Date of filing: 12.01.1996
(51) Int. Cl.: B65B 43/46, B65B 23/08, B65G 47/90

(54) **Gripper for at least one object carrier**
Greifer für mindestens einen Objektträger
Dispositif de préhension pour, au-moins, un porte-objets.

(30) Priority: 12.01.1995 NL 9500064
(43) Date of publication of application: 17.07.1996
(73) Proprietor: FPS Food Processing Systems B.V., NL-3771 VE Barneveld (NL)
(72) Inventor: van der Schoot, Jelle, NL-7121 AL Aalten (NL)
(74) Representative: Smulders, Theodorus A.H.J., Ir.

(56) References cited:
- EP-A- 0 041 304
- FR-A- 2 270 148
- FR-A- 2 320 882
- FR-A- 2 680 153
- US-A- 1 710 096
- US-A- 3 478 924
- US-A- 3 825 293

## Description

This invention relates to a gripper according to the preamble of claim 1.

Such a gripper is known from US-A-3,825,293. This known gripper, however, is intended for picking up stacks of bricks arranged side by side and is not suitable for placing the stackes of bricks in a narrowly enclosed space such as, for instance, a case or a box. The known gripper comprises a number of depending flaps which are intended to be clamped, during the gripping operation, between facing circumferential edges of the bricks which are arranged side by side. As a consequence of the presence of these flaps, the danger that the bricks will tilt and drop from between the gripper element is reduced substantially. However, as stated above, the known gripper is not suitable for placing stacks of bricks in a narrowly enclosed space such as, for instance a case or a box. Grippers which are suitable for placing objects in a narrowly enclosed space such as for instance a box always involve the risk that the objects tilt relative to each other, as a result of which a central object may drop from between the two outer objects and the outer objects may drop as well.

The object of the invention is to solve this problem. To that end, the gripper described in the preamble of claim 1 is characterized by the features recited in the characterizing portion of claim 1.

The depending flaps, which are intended to be clamped between facing circumferential edges of the object carriers in side-by-side arrangement during the gripping operation, ensure that the force exerted by gravity on the central object carrier is transmitted to the gripper via the flaps, for instance through friction. In the absence of the flaps, the outer object carriers have to be pressed towards each other with such force that the central case is clamped tightly between them. Because in most cases the object carriers, at least in cross section, are not rectangular, and hence are clamped against each other through only a narrow circumferential edge, there is a good chance that the object carriers will tilt away relative to each other. The presence of the flaps precludes the possibility of relative tilt of the object carriers in that the facing circumferential edges of the object carriers abut against a gripper part having, for instance, a high coefficient of friction or a suitable profile. With the plate members in the first position, the gripper elements can be moved apart sofar that the free longitudinal edges of the plate members allow free passage of the group of object carriers, and be moved towards each other sofar that the group of object carriers is locked between the plate members without requiring that the plate members be rotated from the position assumed. After having moved the object carriers into a box, the plate member can be moved to the second position, whereby the distance between the plate members does not change.

Because of the flexible design of the flaps, the advantage is provided that dimensional deviation of the object carriers can be accomodated without necessitating a complex movable arrangement of the flaps, as is the case in the known gripper of US-A-3, 825,293.

To make the flaps flexible, they may for instance be made of rubber or from a different, slightly foamed material. Such material, due to the partial compressibility thereof, also features a high coefficient of friction, so that the chances of the object containers slipping along the flaps are minimized.

Further elaborations of the invention are described in the subclaims and will be further clarified on the basis of exemplary embodiments, with reference to the drawings.
Fig. 1 shows a side elevation of a first exemplary embodiment according to the invention; and
Fig. 2 shows a side elevation of a second exemplary embodiment according to the invention.

The gripper 20, 120 comprises two gripper elements 1 which, at least by the free ends 1a thereof, are movable away from and towards each other, as indicated by arrow P, by means of a suitable drive mechanism, for instance a motor and screw spindle, or a piston assembly, or a rod assembly. Each gripper element 1 is arranged for engaging around at least a part of a free circumferential edge O of a group of object carriers such as, for instance, a group of egg cases. To that end, each gripper 1 comprises a circular segment-shaped plate member 3 which is guided between a number of rollers 4, in such a manner that the plate member 3 can move along a circular path. As a result, the free longitudinal edge 5 of the plate member 3 can be moved past the circumferential edge O at a short distance therefrom, between a first position wherein the free longitudinal edge 5 extends against the underside of the group of object carriers, and a second position wherein the free longitudinal edge extends freely above the top of the group of object carriers. During the movement of the plate members 3 from the first to the second position *vice versa*, the distance between the plate members 3 does not change. With the plate members 3 in the first position, the gripper elements 1 can be moved apart so far that the free longitudinal edges 5 of the plate members 3 allow free passage of the group of object carriers, and be moved towards each other so far that the group of object carriers is locked between the plate members 3 without requiring that the plate members be rotated from the position assumed. The gripper 20, 120 is preferably movable in vertical and horizontal direction using lifting means.

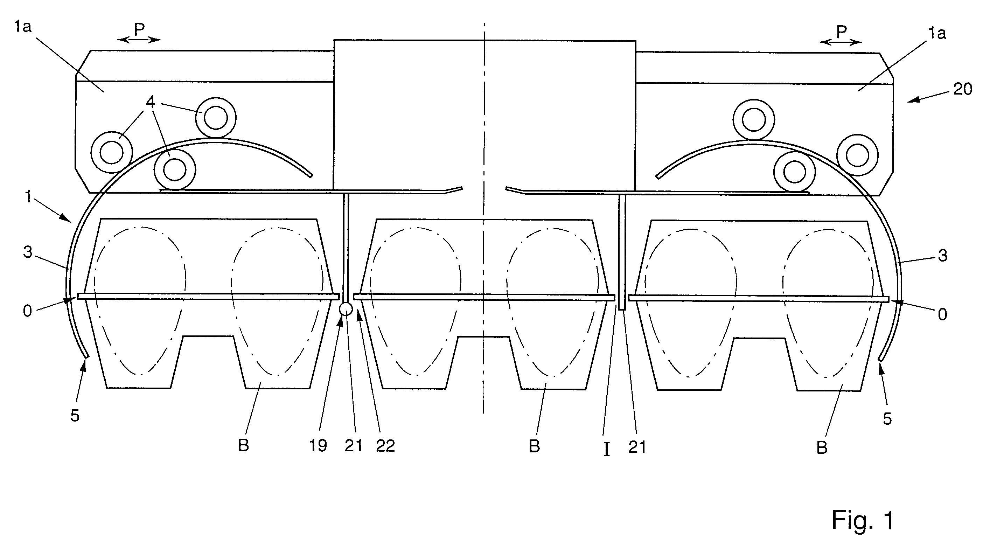

Fig. 1 shows a gripper 20 in side elevation, which is arranged for picking up a number of carriers, such as egg cases B, arranged loosely side by side. In the exemplary embodiment of Fig. 1, three cases B are depicted. The gripper 20 according to this embodiment is provided with two parallel, approximately vertical flaps 21. At the top thereof, each flap 21 is mounted on a movable end 1a of the gripper 20 and has a length sufficient to extend as far as, for instance, beyond facing, projecting longitudinal edges I of the cases B to be picked up. The flaps 21 have, for instance, a high coefficient of friction, have a profile 19 extending in horizontal direction and/or are slightly compressible at least in transverse direction. The purpose and function of these features will be explained in more detail hereinafter.

The gripper 20 according to Fig. 1 can be used as follows.

The plate members 3 are moved apart by moving at least the ends 1a, whereafter the gripper is brought above three egg cases B arranged freely side by side, in such a manner that the flaps 21 extend approximately lengthwise above the gap 22 formed between two adjacent cases B. Then the gripper 20 is moved down until the free longitudinal edges 5 of the plate members 3 are disposed below the level of the circumferential edge of the outer cases B, and preferably below the level of the underside thereof, with the flaps 21, by the free ends thereof, being moved between the facing longitudinal edges I of the cases. When this position has been reached, the ends 1a, and hence the plate members 3, are moved towards each other, whereby the cases B are pressed towards each other. As a result, the flaps 21 are clamped tightly between the cases B, so that the cases B can be partly carried by the flaps 21 when the gripper 20 is moved up.

By giving the flaps 21 a relatively high coefficient of friction, the cases B need only be pressed against the flaps 21 with a relative slight force to prevent the cases B from slipping relative to each other and/or the flaps 21 as the gripper is lifted. If the flaps 21 are not used, there is a risk of the cases B slipping from between the gripper elements 1, also when they are pressed towards each other and against the cases B with great force. If the flaps 21 are provided with a profile 19, for instance in the form of corrugations extending in horizontal direction, or if the flaps 21 are slightly compressible, the cases can be supported even more easily by the flaps 21 because then the form of the flaps 21, in addition to the frictional force, also provides a supporting function. In that case, however, the cases B will have to be spaced slightly further apart in the initial situation.

By providing the gripper 20 with a different number of flaps 21, two cases or more than three cases can be picked up in side-by-side arrangement, and by giving the flaps 21 and plate members 3 a sufficient length, several cases can be placed behind each other and be picked up.

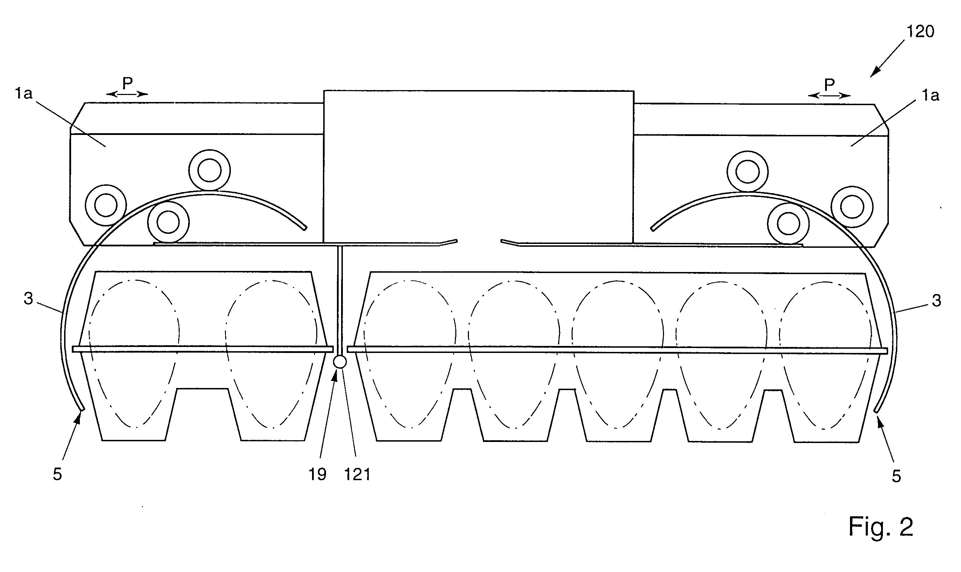

Fig. 2 shows an embodiment of a gripper 120 comparable with the gripper 20 according to Fig. 1. It comprises only one flap 121, which is offset relative to the centre of the gripper 120, in such a manner that on one side of the flap 121 a case B can be arranged in the width direction between the plate member 3 and the flap 121, and on the other side a case B can be arranged lengthwise between the plate member 3 and the flap 121. The gripper 120 according to Fig. 2 can be used similarly to the gripper 20 according to Fig. 1.

The gripper 120, too, through an appropriate choice of the length of the flaps 121 and plate members 3, can pick up several rows of cases B. Moreover, in one section of the gripper 120 the flap 121 can be arranged closer to the right-hand side and in another section closer to the left-hand side of the gripper, so that the cases can be arranged more or less in braced configuration, for instance (with cases containing 2 x 5 eggs) in the first section one case arranged in the width direction on the right and five cases lengthwise on the left, and in the second section the other way around.

The invention is not in any way limited to the embodiments as described and shown in the specification. Many modifications are possible. For instance, the gripper elements can be designed differently, for example as fixedly mounted or tiltable hooks, and the plate members 3 described may also be brought into the first position by rotation. Further, the arrangement of the flaps can be chosen differently, depending on the objects to be picked up, and even combinations of hook elements and flaps can be utilized. Moreover, in the embodiment with the flaps, several layers of objects or objects of different shapes and dimensions can be picked up. The flaps are preferably flexible but may also be of rigid design. These and many other modifications are understood to fall within the scope of the invention.

## Claims

1. A gripper for picking up a group of objects (B) arranged side by side, the gripper comprising at least two gripper elements (1) which, at least by the free ends (1a) thereof, are movable away from and towards each other, said gripper elements (1) being arranged for engagement on or around at least a part of the free circumferential edges (O) of the group of objects, the gripper comprising a number of depending flaps (21, 121), intended to be clamped, during the gripping operation, between facing circumferential edges (I) of the objects (B) arranged side by side, characterized in that, the objects (B) are object carriers (B), such as for instance egg cases (B), wherein each gripper element (1) comprises a circular segment-shaped plate member (3), which plate members (3) are each guided in such a manner that each plate member (3) is movable along a circular path, such that a free longitudinal edge (5) of each plate member (3) can be moved past the circumferential edge (O) at a short distance therefrom, the or each flap being made from flexible material.

2. A gripper according to claim 1, characterized in that the or each flap (21, 121) has a relatively high coefficient of friction, the arrangement being such that during the gripping operation the cases (b) are partly carried by the or each flap (21, 121), substantially through friction.

3. A gripper according to claim 1 or 2, characterized in that the or each flap (21, 121) has a number of protrusions or a profile (19) extending substantially parallel to the gripper elements (1), the arrangement being such that during the gripping operation the cases, through at least a part of the longitudinal edges thereof, are supported by the or each flap (21, 121) on or in the protrusions or profiles (19) thereof.

## Patentansprüche

1. Greifer zum Aufheben einer Gruppe von Seite an Seite angeordneten Objekten (B),
mit zumindest zwei Greiferelementen (1), welche zumindest an ihren freien Enden (1a) voneinander fort und aufeinander zu bewegbar sind, wobei die Greiferelemente zum Eingriff auf oder um zumindest einen Teil der freien Umfangsecken (O) der Gruppe von Objekten ausgebildet sind,
mit einer Anzahl von herabhängenden Laschen (21,121), die dazu vorgesehen sind, während des Greifvorganges zwischen zugewandten Umfangsrändern (I) der Seite an Seite angeordneten Objekten (B) eingeklemmt zu werden, dadurch gekennzeichnet, daß die Objekte (B) Objektträger sind, wie beispielsweise Eierkästen (B), wobei jedes Greiferelement (1) ein kreissegmentförmiges Plattenbauteil (3) umfaßt, wobei jedes der Plattenbauteile (3) in einer Weise geführt ist, daß jedes Plattenbauteil (3) entlang eines kreisförmigen Weges bewegbar ist, derart, daß ein freier Längsrand (5) eines jeden Plattenbauteils (3) hinter die Umfangsecke (O) in einer geringen Entfernung von dieser bewegt werden kann, wobei die oder jede Lasche aus flexiblen Material hergestellt ist.

2. Greifer nach Anspruch 1, dadurch gekennzeichnet, daß die oder jede Lasche (21,121) einen relativ hohen Reibungskoeffizient aufweist, wobei die Anordnung eine solche ist, daß während des Greifvorganges die Kästen (B) teilweise von der oder jeder Lasche (21,121) im wesentlichen durch Reibung getragen werden.

3. Greifer nach Anspruch 1 oder 2, dadurch gekennzeichnet, daß die oder jede Lasche (21,121) eine Anzahl von sich im wesentlichen parallel zu den Greiferelementen (1) erstreckende Vorsprünge oder ein Profil (19) aufweist, wobei die Anordnung eine solche ist, daß während des Greifvorganges die Kästen an zumindest einem Teil ihrer Längsenden durch die oder jede Lasche (21,121) auf oder in den Vorsprüngen oder Profilen (19) selbiger getragen werden.

## Revendications

1. Dispositif de préhension pour prélever un groupe d'objets (B) agencés côte à côte, le dispositif de préhension comprenant au moins deux éléments de préhension (1) qui, au moins par les extrémités libres (1a) de ceux-ci, sont déplacables au loin l'un de l'autre et l'un vers l'autre, lesdits éléments de préhension (1) étant agencés pour s'engager sur ou autour d'au moins une partie des bords périphériques libres (O) du groupe d'objets, le dispositif de préhension comprenant un nombre de volets pendants (21,121), destinés à être serrés, pendant l'opération de préhension, entre des bords périphériques se faisant face (I) des objets (B) agencés côte à côte,
caractérisé en ce que les objets (B) sont des porte-objets (B) tels que par exemple des boîtes (B) à oeufs, chaque élément de préhension (1) comprenant un organe à plaque (3) conformé en segment circulaire, lesquels organes à plaque (3) sont chacun guidés de telle manière que chaque organe à plaque (3) est déplacable le long d'un trajet circulaire, de sorte qu'un bord longitudinal libre (5) de chaque organe à plaque 3 peut être déplacé au-delà du bord périphérique (O) à une courte distance de celui-ci, le ou chaque volet étant réalisé en une matière souple.

2. Dispositif de préhension selon la revendication 1,
caractérisé en ce que le volet ou chaque volet (21,121) présente un coefficient de frottement relativement élevé, l'agencement étant tel que, pendant l'opération de préhension, les boîtes (B) sont partiellement portées par le ou chaque volet (21,121), sensiblement par frottement.

3. Dispositif de préhension selon la revendication 1 ou 2,
caractérisé en ce que le volet ou chaque volet (21,121) présente un nombre de saillies ou un profil (19) s'étendant sensiblement parallèlement aux éléments de préhension (1), l'agencement étant tel que, pendant l'opération de préhension, les boîtes, par au moins une partie des bords longitudinaux de celles-ci, sont supportées par le ou chaque volet (21,121) sur ou dans les saillies ou profils (19) de celui-ci.
